# EUROPÄISCHE PATENTSCHRIFT

(11) **EP 1 268 245 B1**
(45) Veröffentlichungstag und Bekanntmachung des Hinweises auf die Patenterteilung: **02.05.2007**
(21) Anmeldenummer: 01933745.0
(22) Anmeldetag: 23.03.2001
(51) Int. Cl.: B60T 7/04

(54) **BETÄTIGUNGSEINHEIT FÜR EINE ELEKTROHYDRAULISCHE BREMSANLAGE**
OPERATING UNIT FOR AN ELECTROHYDRAULIC BRAKING SYSTEM
UNITE D'ACTIONNEMENT POUR SYSTEME DE FREINAGE ELECTROHYDRAULIQUE

(30) Priorität: 27.03.2000 DE 10015231; 27.03.2000 DE 10015232; 11.08.2000 DE 10039238
(43) Veröffentlichungstag der Anmeldung: 02.01.2003
(73) Patentinhaber: Continental Teves AG & Co. oHG, 60488 Frankfurt (DE)
(72) Erfinder: DROTT, Peter, 65936 Frankfurt/Main (DE); KRÄMER, Horst, 65462 Ginsheim-Gustavsburg (DE); KRANLICH, Holger, 61184 Karben (DE); HOFFMANN, Jan, Rochester Hills, MI 48309 (US)
(86) Internationale Anmeldenummer: PCT/EP2001/003356
(87) Internationale Veröffentlichungsnummer: WO 2001/072566

(56) Entgegenhaltungen:
- WO-A-99/32337
- DE-A- 19 632 035
- DE-A- 19 822 411
- US-A- 5 544 948
- US-A- 6 033 036

## Beschreibung

Die vorliegende Erfindung betrifft eine Betätigungseinheit für eine elektrohydraulische Bremsanlage vom Typ "Brake-by-wire" mit: einem mittels eines Betätigungspedals betätigbaren, durch eine erste Rückstellfeder vorgespannten ersten Kolben (DK-Kolben) sowie einem durch eine zweite Rückstellfeder vorgespannten zweiten Kolben (SK-Kolben), die in einem Gehäuse hintereinander angeordnet sind und mit einem drucklosen Druckmittelvorratsbehälter in Verbindung stehende Druckräume begrenzen, an die mittels einer ersten und einer zweiten Ventileinrichtung absperrbare hydraulische Leitungen angeschlossen sind, mit einem Wegsimulator, der durch einen eine Simulatorkammer begrenzenden, mit einer Simulatorfeder zusammenwirkenden hydraulischen Simulatorkolben gebildet wird, der mittels einer hydraulischen Verbindung mit dem im ersten Druckraum eingesteuerten Druck beaufschlagbar ist, wobei eine dritte Ventileinrichtung vorgesehen ist, die eine am zweiten Kolben angeordnete Dichtung aufweist und durch eine Relativbewegung des zweiten Kolbens gegenüber dem Gehäuse betätigbar ist.

Eine derartige Betätigungseinheit ist z. B. aus der Internationalen Patentanmeldung WO 99/32337 bekannt. Als nachteilig wird bei der vorbekannten Betätigungseinheit insbesondere die Tatsache angesehen, dass bei einem Ausfall eines dem ersten Druckraum zugeordneten Trennventils, der sein unerwünschtes Öffnen zur Folge hat, eine schlagartige Druckerhöhung im ersten Druckraum, in der den ersten Druckraum mit der Simulatorkammer verbindenden Verbindung sowie in der Simulatorkammer statt findet, insbesondere dann, wenn in den an den ersten Druckraum angeschlossenen Radbremsen in der "Brake-by-wire"-Betriebsart ein hoher Druck eingesteuert wurde. Durch die Wirkung dieses Drucks bewegt sich der zweite Kolben in der Betätigungsrichtung, wobei das Druckmittelvolumen durch den Bereich der dritten Ventileinrichtung in die Simulatorkammer mit relativ hoher Geschwindigkeit strömt, bis der die vorhin genannte Dichtung bildende O-Ring schlagartig an der Kante der Umfangsnut zur Anlage kommt, die einen Bestandteil der dritten Ventileinrichtung darstellt. Der beschriebene Anschlag unter dem hohen Druck verursacht jedoch eine Verformung des O-Rings, die dessen Verschleiß und u. U. dessen Ausfall zur Folge hat.

Es ist daher Aufgabe der vorliegenden Erfindung eine Betätigungseinheit der eingangs genannten Gattung vorzuschlagen, bei der die vorhin genannten Nachteile weitestgehend eliminiert werden und bei der somit eine erhebliche Erhöhung ihrer Betriebssicherheit erreicht wird.

Diese Aufgabe wird erfindungsgemäß dadurch gelöst, dass zwischen der Simulatorkammer und dem Druckmittelvorratsbehälter eine zweite hydraulische Verbindung vorgesehen ist, die durch die dritte Ventileinrichtung absperrbar bzw. freigebbar ist, wobei die Dichtung der dritten Ventileinrichtung mit dem Mündungsbereich eines im Bewegungsbereich der Dichtung ausgebildeten Kanals zusammenwirkt, der zusammen mit einem vom zweiten Kolben begrenzten Nachlaufraum die zweite hydraulische Verbindung bildet.

Eine vorteilhafte Weiterbildung der Erfindung sieht vor, dass in der hydraulischen Verbindung oder in der zweiten hydraulischen Verbindung hydraulische Widerstände bzw. Drosselmittel vorgesehen sind. Durch die erwähnten Maßnahmen wird eine wirksame Dämpfung bei der Betätigung des Simulators erreicht.

Weitere vorteilhafte Ausführungen sind in den Unteransprüchen 4 bis 8 aufgeführt.

Für die Fahrerwunscherfassung hat sich als vorteilhaft herausgestellt, ein Wegsensorsignal zu verwenden. Das Wegsensorsignal wird bei einer weiteren Ausgestaltung des Erfindungsgegenstandes von einem im Gehäuse integrierten Wegmeßsystem geliefert, wobei der erste Kolben als Bestandteil dieses den Betätigungsweg erfassenden Meßsystems ausgebildet ist.

Bei einem sehr zuverlässig funktionierenden Wegmeßsystem sind auf der zylindrischen Oberfläche des ersten Kolbens Signalgeberelemente des Wegmeßsystems angebracht, dessen Signalaufnehmer im Gehäuse angeordnet ist.

Weitere Einzelheiten, Merkmale und Vorteile der Erfindung gehen aus der nachfolgenden Beschreibung eines Ausführungsbeispiels unter Bezugnahme auf die beiliegende Zeichnung hervor. In der Zeichnung zeigt:
- Fig. 1: eine erste Ausführung der erfindungsgemäßen Betätigungseinheit im Axialschnitt; und
- Fig. 2: eine Einzelheit der in Fig. 1 gezeigten Ausführung in größerem Maßstab.

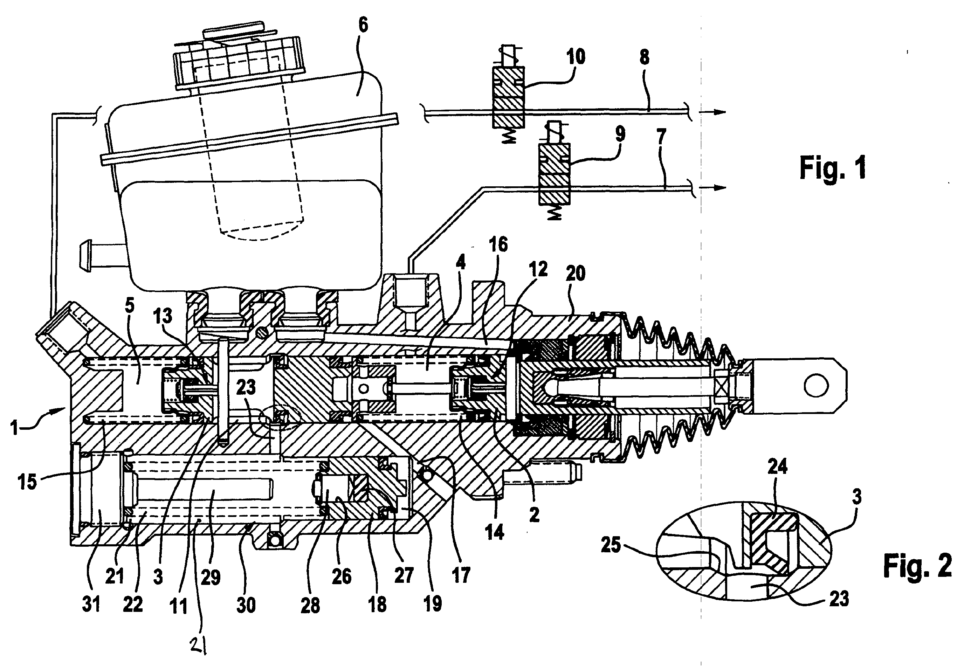

Die in Fig. 1 dargestellte Betätigungseinheit besteht im wesentlichen aus einem mittels eines nicht gezeigten Betätigungspedals betätigbaren, zweikreisigen Druckerzeuger bzw. Tandemhauptzylinder 1 sowie einem mit dem Hauptbremszylinder 1 zusammenwirkenden Simulator 30. Ein Hauptbremszylindergehäuse 20 weist in einer Bohrung durch zwei Kolben 2, 3 begrenzte, voneinander getrennte Druckräume 4,5 auf, die mit einem drucklos ausgeführten Druckmittelvorratsbehälter 6 in Verbindung stehen. An die beiden Druckräume (Primärdruckraum 4, Sekundärdruckraum 5) sind mittels lediglich schematisch angedeuteter, absperrbarer hydraulischer Verbindungen 7, 8 nicht gezeigte, den Fahrzeugachsen zugeordnete hydraulische Radbremsen angeschlossen. Das Absperren der hydraulischen Verbindungen 7, 8 erfolgt beispielsweise durch elektromagnetisch betätigbare, stromlos offene (SO-) 2/2-Wegeventile 9, 10. Während der erste Druckraum 4 unter Zwischenschaltung eines im ersten Kolben 2 angeordneten ersten Zentralventils 12 mittels eines Druckmittelkanals 16 mit dem Druckmittelvorratsbehälter 6 in Verbindung steht, begrenzt der zweite Kolben 3 im Hauptbremszylindergehäuse 20 einen Nachlaufraum 11, der einerseits über ein im zweiten Kolben 3 angeordnetes zweites Zentralventil 13 mit dem zugeordneten Druckraum 5 und andererseits über einen im Hauptzylindergehäuse 20 ausgebildeten, nicht gezeigten Druckmittelkanal mit dem Druckmittelvorratsbehälter 6 in Verbindung steht.

Wie Fig. 1 weiter zu entnehmen ist, sind in den erwähnten Druckräumen 4, 5 eine erste sowie eine zweite Rückstellfeder 14, 15 angeordnet, die die Kolben 2, 3 entgegen deren Betätigungsrichtung vorspannen bzw. in der Ausgangsposition halten. An den ersten bzw. den Primärdruckraum 4 ist mittels einer hydraulischen Verbindung 17 ein hydraulischer Raum 19 angeschlossen, der von einem hydraulischen Kolben bzw. Simulatorkolben 18 begrenzt ist. Der Simulatorkolben 18, der andererseits eine Simulatorkammer 21 begrenzt, bildet zusammen mit einer in der Simulatorkammer 21 angeordneten Simulatorfeder 22 einen Pedalsimulator, der mit dem Bezugszeichen 30 versehen ist und der beim Absperren der Druckräume 4, 5 dem Fahrer des Fahrzeuges das gewöhnliche Pedalgefühl vermittelt. Die Simulatorfeder 22 bestimmt dabei der Verlauf der Pedalcharakteristik, d.h., der Abhängigkeit der Pedalkraft vom Betätigungsweg.

Um beim Absperren der Druckräume 4, 5 eine Relativbewegung des ersten Kolbens 2 gegenüber dem Gehäuse 20 zu ermöglichen, die ein Beaufschlagen des hydraulischen Raumes 19 mit dem aus dem ersten Druckraum 4 verdrängten Druckmittelvolumen zur Folge hat, ist zwischen der Simulatorkammer 21 und dem vorhin erwähnten Nachlaufraum 11 bzw. dem Druckmittelvorratsbehälter 6 eine hydraulische Verbindung 23 vorgesehen, die im Falle einer Notbremsung unterbrochen bzw. abgesperrt werden muß. Die hydraulische Verbindung 23 ist im in Fig. 1 gezeigten Beispiel als eine Bohrung bzw. ein Kanal ausgebildet, in dessen Mündungsbereich im Nachlaufraum 11 eine am zweiten Kolben 3 angeordnete Dichtung bzw. Dichtmanschette 24 (s. insbesondere Fig. 2) angeordnet ist. Der Mündungsbereich des Kanals 23 bildet zusammen mit der Dichtmanschette 24 eine dritte Ventileinrichtung. Durch die beschriebene Anordnung wird erreicht, daß das Druckmittel beim abgesperrten zweiten Druckraum 5 aus dem ersten Druckraum 4 an der (stehenden) Dichtmanschette 24 vorbei in den Druckmittelvorratsbehälter 6 verschoben werden kann. Dagegen werden bei einer Notbremsung, bei der die vorhin erwähnten Absperrventile 9, 10 offen bleiben, die beiden Kolben 2, 3 verschoben, so daß die auf dem zweiten Kolben 3 angeordnete Dichtmanschette 24 die Mündung des Kanals 23 überfährt und die Verbindung zwischen dem ersten Druckraum 4 bzw. der Simulatorkammer 21 und dem Druckmittelvorratsbehälter 6 unterbricht, so daß der Pedalsimulator 30 kein Druckmittelvolumen mehr aufnehmen kann und in den beiden Druckräumen 4, 5 ein hydraulischer Druck aufgebaut werden kann.

Der vorhin erwähnten Fig. 2 ist zu entnehmen, daß die hydraulische Verbindung 23 in einer Ringnut 25 mündet, die derart bemessen ist, daß die Dichtmanschette 24 im gezeigten Zustand radial spannungsfrei verbaut ist. Dadurch entfallen im "Brake-by-wire"-Modus sowohl die Reibkräfte als Störgröße in der Kraft-Weg-Kennlinie als auch der Verschleiß der Dichtmanschette.

Wie schließlich aus Fig. 1 erhellt, weist der Simulatorkolben 18 eine Sackbohrung 26 auf, die ein elastisches Teil 27, beispielsweise eine gummielastische Scheibe, sowie ein am elastischen Teil 27 axial anliegendes Druckstück 28 aufnimmt. Dem Druckstück 28 gegenüber befindet sich in der Simulatorkammer 21 eine zylindrische Verlängerung 29 eines die Simulatorkammer 21 verschließenden Verschlußteiles 31, an der bei einem übermäßigen Hub des Simulatorkolbens 18 das Druckstück 28 zur Anlage kommt. Durch die beschriebenen Maßnahmen wird ein elastischer Anschlag realisiert. Um bei der Betätigung der erfindungsgemäßen Betätigungseinheit eine Dämpfüngsfunktion zu erfüllen können in der hydraulischen Verbindung 17 oder der zweiten hydraulischen Verbindung 23 nicht gezeigte hydraulische Widerstände bzw. Drosselmittel vorgesehen sein.

Ein wichtiger technischer Aspekt besteht bei sämtlichen Bremsanlagen des Typs "Brake-by-Wire" in der zuverlässigen Erkennung des Fahrerverzögerungswunsches. Im Laufe der Entwicklungen hat sich als vorteilhaft herausgestellt, daß hierzu Signale von den Betätigungsweg der Betätigungseinheit erfassenden Systemen bzw. Sensoranordnungen verwendet werden können. Deswegen wird vorgeschlagen, im Eintrittsbereich des Gehäuses 20 ein nicht dargestelltes Wegmeßsystem vorzusehen, dessen für die Signalgenerierung zuständige Elemente auf der zylindrischen Oberfläche des ersten Kolbens angebracht sind, während die Signalaufnehmerelemente im Gehäuse 20 integriert sind.

## Patentansprüche

1. Betätigungseinheit für eine elektrohydraulische Bremsanlage vom Typ "Brake-by-wire" mit: einem mittels eines Betätigungspedals betätigbaren, durch eine erste Rückstellfeder vorgespannten ersten Kolben (2) (DK-Kolben) sowie einem durch eine zweite Rückstellfeder vorgespannten zweiten Kolben (3) (SK-Kolben), die in einem Gehäuse hintereinander angeordnet sind und mit einem drucklosen Druckmittelvorratsbehälter (6) in Verbindung stehende Druckräume (4, 5) begrenzen, an die mittels einer ersten und einer zweiten Ventileinrichtung (9, 10) absperrbare hydraulische Leitungen (7, 8) angeschlossen sind, mit einem Wegsimulator (30), der durch einen eine Simulatorkammer (21) begrenzenden, mit einer Simulatorfeder (22) zusammenwirkenden hydraulischen Simulatorkolben (18) gebildet wird, der mittels einer hydraulischen Verbindung (17) mit dem im ersten Druckraum (4) eingesteuerten Druck beaufschlagbar ist, wobei eine dritte Ventileinrichtung vorgesehen ist, die eine am zweiten Kolben (3) angeordnete Dichtung (24) aufweist und durch eine Relativbewegung des zweiten Kolbens (3) gegenüber dem Gehäuse betätigbar ist, **dadurch gekennzeichnet, dass** zwischen der Simulatorkammer (21) und dem Druckmittelvorratsbehälter (6) eine zweite hydraulische Verbindung vorgesehen ist, die durch die dritte Ventileinrichtung absperrbar bzw. freigebbar ist, wobei die Dichtung (24) der dritten Ventileinrichtung mit dem Mündungsbereich eines im Bewegungsbereich der Dichtung (24) ausgebildeten Kanals (23) zusammenwirkt, der zusammen mit einem vom zweiten Kolben (3) begrenzten Nachlaufraum (11) die zweite hydraulische Verbindung bildet.

2. Betätigungseinheit nach Anspruch 1 **dadurch gekennzeichnet, dass** in der hydraulischen Verbindung (14) hydraulische Widerstände bzw. Drosselmittel vorgesehen sind.

3. Betätigungseinheit nach Anspruch 1 oder 2 **dadurch gekennzeichnet, dass** in der zweiten hydraulischen Verbindung (23) hydraulische Widerstände bzw. Drosselmittel vorgesehen sind.

4. Betätigungseinheit nach einem der Ansprüche 1 bis 3 **dadurch gekennzeichnet, dass** der Mündungsbereich des Kanals in einem dem zweiten Druckraum (5) zugeordneten Nachlaufraum (11) derart ausgebildet ist, dass die Dichtung (24) radial spannungsfrei verbaut ist.

5. Betätigungseinheit nach einem der Ansprüche 1 bis 4 **dadurch gekennzeichnet, dass** die Dichtung (24) als eine Dichtmanschette ausgeführt ist.

6. Betätigungseinheit nach einem der Ansprüche 1 bis 4 **dadurch gekennzeichnet, dass** die Dichtung als ein Dicht- bzw. ein O-Ring ausgeführt ist.

7. Betätigungseinheit nach einem der Ansprüche 1 bis 6, **dadurch gekennzeichnet, daß** der Simulatorkolben (18,18') mit einem elastischen Anschlag (27,28,29) zusammenwirkt.

8. Betätigungseinheit nach Anspruch 7 **dadurch gekennzeichnet, dass** der elastische Anschlag (27,28) im Simulatorkolben (18) angeordnet ist und mit einem axialen Anschlagelement (29) in Eingriff bringbar ist.

9. Betätigungseinheit nach einem der vorhergehenden Ansprüche **dadurch gekennzeichnet, dass** der erste Kolben als Bestandteil eines den Betätigungsweg erfassenden, im Gehäuse integrierten Wegmesssystems ausgebildet ist.

10. Betätigungseinheit nach Anspruch 9 **dadurch gekennzeichnet, dass** auf der zylindrischen Oberfläche des ersten Kolbens (2) Signalgeberelemente des Wegmeßsystems angebracht sind, dessen Signalaufnehmer im Gehäuse (20) angeordnet ist.

## Claims

1. Operating unit for an electrohydraulic braking system of the 'brake-by-wire' type, including:
a first piston (2) (push rod piston) operable by an actuating pedal and biased by a first resetting spring and a second piston (3) (floating piston) biased by a second resetting spring, the said pistons being arranged in tandem in a housing and delimiting pressure chambers (4, 5) that are in connection with an non-pressurized pressure fluid supply reservoir (6), with hydraulic lines (7, 8) closable by a first and a second valve device (9, 10) being connected to said pressure chambers, including a travel simulator (30) which is provided by a simulator piston (18) delimiting a simulator chamber (21) and cooperating with a simulator spring (22), to which simulator piston the pressure introduced into the first pressure chamber (4) can be applied by way of a hydraulic connection (17), wherein a third valve device is provided, which includes a seal (24) arranged at the second piston (3) and is operable by a relative movement of the second piston (3) in relation to the housing,
**characterized in that** a second hydraulic connection is provided between the simulator chamber (21) and the pressure fluid supply reservoir (6), which can be closed or opened, respectively, by the third valve device, and the seal (24) of the third valve device cooperates with the mouth area of a channel (23) provided in the range of movement of the seal (24) and constituting the second hydraulic connection (23) together with a supply chamber (11) bounded by the second piston (3).

2. Operating unit as claimed in claim 1,
**characterized in that** hydraulic resistors or throttling means, respectively, are provided in the hydraulic connection (14).

3. Operating unit as claimed in claim 1 or 2,
**characterized in that** hydraulic resistors or throttling means, respectively, are provided in the second hydraulic connection (23).

4. Operating unit as claimed in any one of claims 1 to 3,
**characterized in that** the mouth area of the channel in a supply chamber (11) associated with the second pressure chamber (5) is so designed that the seal (24) is mounted without tension in a radial direction.

5. Operating unit as claimed in any one of claims 1 to 4,
**characterized in that** the seal (24) is configured as a sealing sleeve.

6. Operating unit as claimed in any one of claims 1 to 4,
**characterized in that** the seal is configured as a sealing ring or O-ring.

7. Operating unit as claimed in any one of claims 1 to 6,
**characterized in that** the simulator piston (18, 18') cooperates with an elastic stop (27, 28, 29.

8. Operating unit as claimed in claim 7,
**characterized in that** the elastic stop (27, 28) is arranged in the simulator piston (18) and is movable into engagement with an axial stop element (29).

9. Operating unit as claimed in any one of the preceding claims,
**characterized in that** the first piston is configured as a component of a travel-measuring system that senses the actuating travel and is integrated in the housing.

10. Operating unit as claimed in claim 9,
**characterized in that** signal generator elements of the travel-measuring system are mounted on the cylindrical surface of the first piston (2), and the system's signal pickups are arranged in the housing (20).

## Revendications

1. Unité d'actionnement pour un système de freinage électrohydraulique du type "break-by-wire" comportant : un premier piston (2) (piston DK) à actionner au moyen d'une pédale d'actionnement et précontraint par un premier ressort de rappel, ainsi qu'un second piston (3) (piston SK) précontraint par un second ressort de rappel, lesquels sont disposés l'un derrière l'autre dans un boîtier et délimitent des compartiments sous pression (4, 5) en liaison avec un réservoir de fluide sous pression (6) hors pression, auquel sont raccordées des conduites hydrauliques (7, 8) pouvant être fermées au moyen d'un premier et d'un deuxième dispositif à soupape (9, 10), comportant un simulateur de course (30) qui est formé par un piston de simulateur hydraulique (18) délimitant une chambre de simulateur (21) et coopérant avec un ressort de simulateur (22), lequel peut recevoir, au moyen d'une liaison hydraulique (17), la pression introduite dans le premier compartiment sous pression (4), un troisième dispositif à soupape étant prévu qui comporte une garniture d'étanchéité (24) disposée sur le second piston (3) et peut être actionné par un mouvement relatif du second piston (3) par rapport au boîtier, **caractérisée en ce qu'**il est prévu, entre la chambre de simulateur (21) et le réservoir de fluide sous pression (6), une seconde liaison hydraulique qui peut être fermée ou ouverte par le troisième dispositif à soupape, la garniture d'étanchéité (24) du troisième dispositif à soupape coopérant avec la zone d'embouchure d'un canal (23) réalisé dans la zone de déplacement de la garniture d'étanchéité (24), lequel forme la seconde liaison hydraulique avec un compartiment complémentaire (11) limité par le second piston (3).

2. Unité d'actionnement selon la revendication 1, **caractérisée en ce que** des résistances hydrauliques ou moyens d'étranglement sont prévus dans la liaison hydraulique (14).

3. Unité d'actionnement selon la revendication 1 ou 2, **caractérisée en ce que** dans la seconde liaison hydraulique (23) sont prévues des résistances hydrauliques ou des moyens d'étranglement.

4. Unité d'actionnement selon l'une des revendications 1 à 3, **caractérisée en ce que** la zone d'embouchure du canal est réalisée dans un compartiment complémentaire associé au second compartiment sous pression (5), de manière que la garniture d'étanchéité (24) soit montée radialement sans tension.

5. Unité d'actionnement selon l'une des revendications 1 à 4, **caractérisée en ce que** la garniture d'étanchéité (24) est réalisée sous la forme d'un manchon d'étanchéité.

6. Unité d'actionnement selon l'une des revendications 1 à 4, **caractérisée en ce que** la garniture d'étanchéité est réalisée sous la forme d'un joint d'étanchéité ou joint torique.

7. Unité d'actionnement selon l'une des revendications 1 à 6, **caractérisée en ce que** le piston de simulateur (18, 18') coopère avec une butée élastique (27, 28, 29).

8. Unité d'actionnement selon la revendication 7, **caractérisée en ce que** la butée élastique (27, 28) est disposée dans le piston de simulateur (18) et peut être amenée en prise avec un élément de butée axial (29).

9. Unité d'actionnement selon l'une des revendications précédentes, **caractérisée en ce que** le premier piston est réalisé en tant que partie intégrante d'un système de mesure de course intégré dans le boîtier et détectant la course d'actionnement.

10. Unité d'actionnement selon la revendication 9, **caractérisée en ce que** sur la surface cylindrique du premier piston (2) sont placés des éléments d'un transmetteur de signaux ou du système de mesure de course dont le capteur de signaux est disposé dans le boîtier (20).
